Europäisches Patentamt

**European Patent Office**

Office européen des brevets

(19)

(11) Publication number: **0 105 734**
**A2**

(12) # EUROPEAN PATENT APPLICATION

(21) Application number: **83305907.4**

(22) Date of filing: **29.09.83**

(51) Int. Cl.³: **F 24 D 5/00**

(30) Priority: **30.09.82 GB 8228021**

(43) Date of publication of application:
**18.04.84 Bulletin 84/16**

(84) Designated Contracting States:
**DE FR GB IT NL SE**

(71) Applicant: **BORG-WARNER LIMITED**
**Latchmore Court 10 Brand Street**
**Hitchin Hertfordshire(GB)**

(72) Inventor: **Foley, Peter Neville**
**22 Kingsteignton Shoeburyness**
**Southend-on-Sea Essex SS3 8AY(GB)**

(74) Representative: **Ayers, Martyn Lewis Stanley et al,**
**J.A. KEMP & CO. 14 South Square Gray's Inn**
**London, WC1R 5EU(GB)**

(54) **Air-to-air heat pump apparatus.**

(57) Heat pump apparatus for heating a controlled environment such as a glasshouse has two inlets (123, 137) for damp air from the environment (100). An evaporator (107) abstracts heat from a mixture and ambient air and damp air from one inlet (123) and supplies this to the damp air from the second inlet (137) prior to its recirculation to the environment. The compressor (105) of the heat pump together with a fossil-fueled engine are mounted in the air flow with the cooling of the engine providing further heat to the output heated air.

*Fig.4.*

EP 0 105 734 A2

- 1 -

DESCRIPTION

TITLE: AIR-TO-AIR HEAT PUMP APPARATUS

The present invention relates to a heat pump and more particularly to air to air heat pump apparatus having a refrigerant compressor driven by a fossil-fueled engine and adapted for heating air to be supplied to a closed environment, for example horticultural glasshouses.

Air to air heat pumps are known which have a refrigerant circuit comprising an evaporator for extracting heat from a first airstream, a condensor for rejecting heat to a second airstream and a refrigerant compressor driven by a fossil-fueled engine. It is also known to recover waste heat from the engine in such a heat pump.

According to the present invention there is provided a heat pump apparatus for heating air to be supplied to a closed environment, part of the heat to be supplied being extracted from damp air received from the environment, such apparatus having a refrigerator circuit comprising an evaporator for extracting heat from part of the flow of air through the apparatus, a condensor for rejecting heat to a second part of the flow of air through the apparatus and a refrigerant compressor; and a fossil-fueled engine for driving the compressor and so disposed in the air flow that the heat radiated from it heats the air flow, characterised in that the first part of the air flow has separate fresh air and damp air inlets; means are provided for venting at least some of the first part of the air flow to atmosphere and, optionally for venting some of the first part of the air flow through a first inlet into the second part of the air flow; second and third inlets are provided to the second air flow for the inlet of fresh air and damp air thereto; and a radiator for rejecting further heat from the engine is located in the second part of the air flow.

The apparatus of the invention is of particular use in the heating of glasshouses. Thus in the closed environment of a glasshouse, the air becomes particularly humid and if one simply has a closed circuit heating system difficulties arise from a build-up of excess moisture. The heat pump apparatus of the present invention enables heat to be abstracted from the high enthalpy damp air abstracted from the glasshouse thus preventing excess moisture build-up while at the same time avoiding the waste of heat which would occur if the air were simply to be dumped to atmosphere by opening the glasshouse roof vents. However it is still desirable to recirculate the air, at least in part, preferably a major part, to maintain a high level of carbon dioxide in the air. Thus the carbon dioxide content may be required to be as much as 1500 ppm instead of the 300 ppm present in the atmosphere. The present apparatus provides for this by having a large volume recirculation of air heated by passage in the second part of the air flow through the condenser with a separate abstraction of damp air to the first part of the air flow for abstraction of heat therefrom. The desirable environmental conditions can then be maintained in the glasshouse with the minimum use of prime energy.

The radiator may be in a circuit arranged to convey to it coolant heated by the coolant system of the engine, the lubricant system of the engine, an exhaust manifold jacket and an exhaust gas heat exchanger. Engine coolant may be delivered direct to the radiator or, where it is desired to keep the engine coolant separate from the radiator coolant, there may be a heat exchanger between the engine and radiator coolants. The exhaust manifold jacket may comprise a jacket surrounding the exhaust manifold and defining a space through which the coolant may pass in heat exchange relationship with the manifold.

Means may be provided selectively to admit air from a source of air of high enthalpy content to the first part of the air flow to maximise the amount of heat available for recovery; likewise the source of air for the second part of the air flow is selectable to maximise its heat content prior to heat exchange with the condensor and radiator and thus reduce the heat required to heat the second airstream to the desired degree.

Obviously, in normal circumstances, the prime source of heat from the engine, other than what is radiated and convected to the first part of the flow of air, will be from its coolant system and the radiator will be arranged to radiate heat at least from this and, preferably, from one or more others of the other sources just listed.

In one embodiment the engine is provided in the first airstream, rather than in the second part of this flow of air, to provide a simple arrangement to enable it to run cooler and provide for easier control of the temperature of the second airstream. Placing the radiator, in the second airstream provides for greater thermal efficiency than, for example, rejecting heat from the coolant system to the first airstream either upstream or downstream of the evaporator.

The selection of the source of air for the second airstream may be made on the basis of a measurement of heat content so as to reduce the amount of extra heat required although, as will be described later, a simple temperature requirement control can be effective.

In a presently preferred embodiment the engine and compressor are mounted in the second airstream with the radiator immediately downstream of the fresh air inlet thereto. This provides adequate cooling because of the highly efficient location of the radiator where it is subject to maximum cooling, by the inlet fresh air which is only mixed with what is normally the major portion of the second airstream for passage to the outlet after that portion has been heated by passage through the condensor. Preferably the means for optionally feeding air from the first airstream to the second airstream is effective when the ambient temperature is lower than the temperature of air of the first airstream downstream of the evaporator, this air from the first airstream being fed into the second airstream at a location upstream of the condensor.

The invention will be further described by way of example with reference to the accompanying drawings in which like reference numerals denote like parts and in which:-

Figure 1 a somewhat schematic plan view of an embodiment of heat pump apparatus of the invention;

Figure 2 is a block diagram of the control circuitry of the embodiment of Figure 1;

Figure 3 is a schematic diagram of the heat pump circuit; and

Figure 4 is a schematic plan view of a second embodiment of the invention.

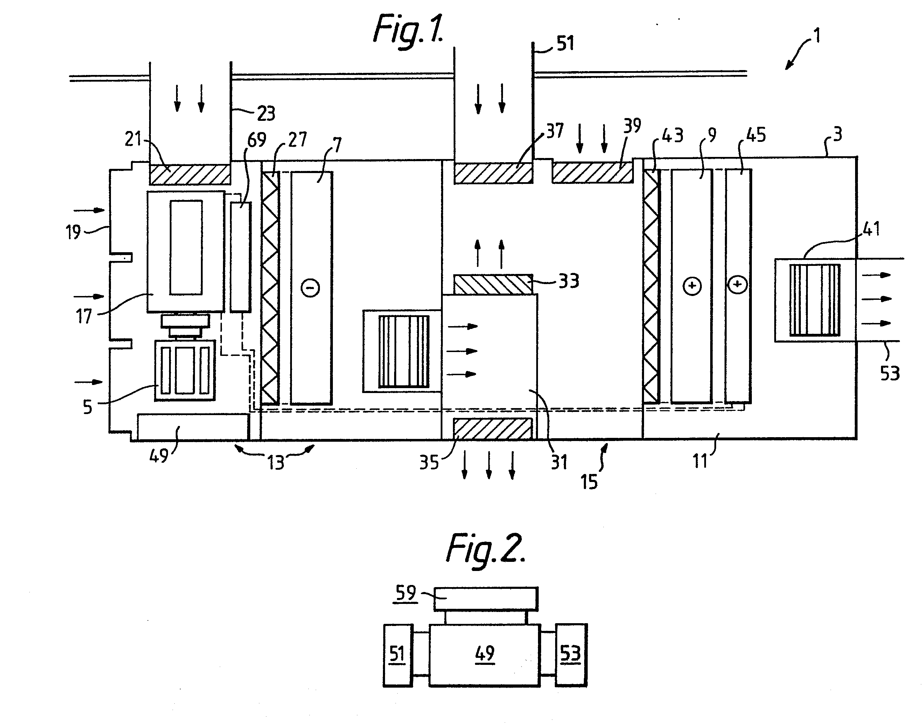

As shown in Figure 1, the heat pump unit 1 comprises a chassis or supporting frame 3 on which are mounted the principal components of the heat pump refrigerant circuit, is of the non-reverse cycle type and comprises a compressor 5, an evaporator 7 and a condensor 9. The various other components of the refrigerant circuit, not essential to an understanding of the invention, such as the thermostatic expansion valve and pipework, have been omitted from Figure 1 in the interests of clarity.

Two closed compartments 13 and 15 are defined, by means of panelling such as 11 fitted to the chassis.

Within the first compartment 13 are located the compressor 5, evaporator 7 and a water cooled, fossil-fueled engine 17, preferably gas or diesel for driving the compressor 5. A louvre 19 allows air to enter the compartment and pass over the engine and compressor, while dampers 21 having a number of control vanes can selectively admit air from a source such as ducting 23.

Air from the louvre 19 and, depending on the setting of the dampers 21, from the ducting 23, is drawn into the compartment 13 to be heated by heat radiated and convected from the compressor 5 and engine 17. The air then passes through a filter 27 and thence through the evaporator 7 where heat is extracted from it by means of a blower 29 which blows the air out of the compartment into an outlet chamber 31 located next to the second compartment 15.

The outlet chamber 31 is provided with two sets of dampers 33 and 35 by means of which it can either be admitted to the compartment 15 via the recirculation damper 33 or exhausted to the outside by the exhaust damper 35.

At the side of the compartment 15 opposite to the exhaust damper 35 are two sets of dampers 37 and 39 which can selectively admit air from two further sources to be explained below.

At the end of the compartment 15 remote from the compartment 13 is a blower 41 which draws air through whichever of the dampers 33, 37 and 39 will permit it, through a filter 43 disposed immediately upstream of the condensor 9 the condensor 9 itself and a radiator 45. The radiator 45 is connected by means of pipework 47 to the engine 17 so that engine coolant is heated in the engine block, delivered via the pipework 47 to the radiator 45 and then returned. The coolant circuit may include further heat exchangers at the engine end of the circuit for heat exchange with the engine lubricant and/or engine exhaust gas and the coolant circuit may include a coolant jacket surrounding the engine exhaust manifold.

An exhaust gas heat exchanger 69 may as shown be located upstream in the airstream from the evaporator 7 and connected in series in the coolant circuit with the engine.

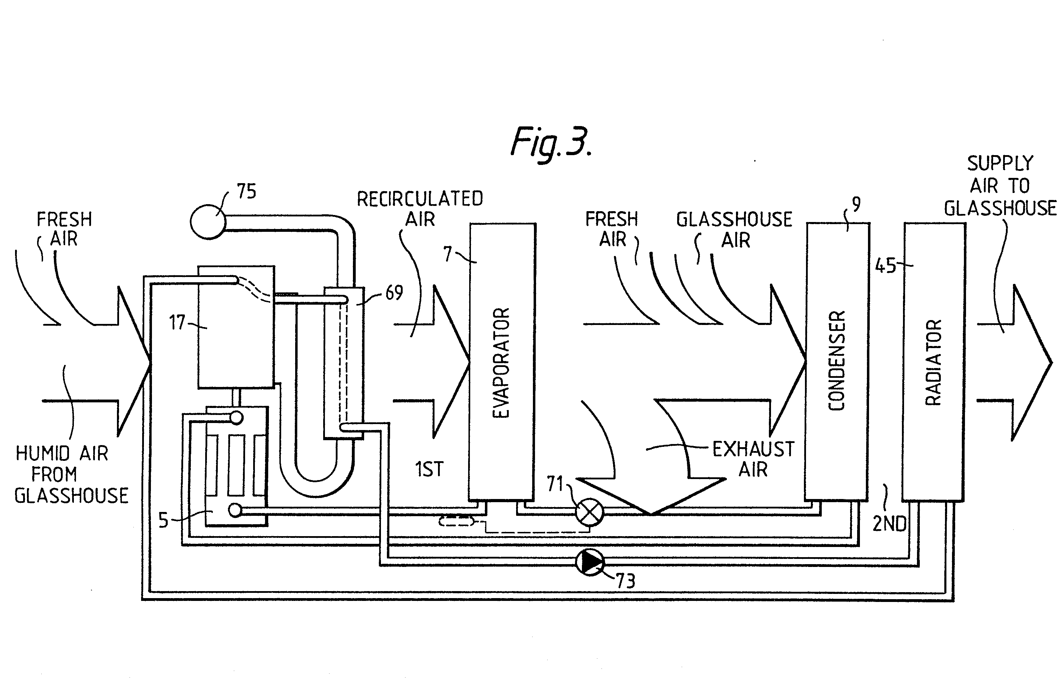

Figure 3 shows schematically the refrigerant and coolant circuitry of the heat pipe, including those components already described as well as a thermostatic expansion valve 71, a coolant circulating pump 73 and the engine exhaust pipe 75 - note that the latter exhausts to the outside rather than the airstream in compartment 13.

The operation of the heat pump unit 1 will now be described with reference to its application to heating of a glasshouse but it will be appreciated that this is for the purposes of illustration only and that the invention is not in anyway limited to that application.

Glasshouses generally operate at high humidity levels and the high humidity provides a valuable source of heat recovery for heating the glasshouse interior, namely the latent heat of vapourisation of the moisture in the air. By cooling air from the glasshouse sufficient to condense the moisture, the latent heat may be used to heat incoming, dryer air.

For use in such an application, the heat pump may conveniently be located outside the glasshouse and connected to it by ducting which conveys glasshouse space air to the dampers 21 and 37 and delivers heated air from the blower 41 back to the interior of the glasshouse.

Control circuitry 49 located in or adjacent to the compartment 13 has associated with it an array 51 of sensors for detecting various conditions relevant to the operation of the heat pump unit including the humidity of air entering the damper 21, the respective enthalpies of air entering the compartment 15 from the recirculation damper 33, recirculation space air damper 37 and fresh air damper 39 and the temperature of the outlet air from the blower 41. The control circuitry is further provided with an array of actuators 53 for controlling the operation of the heat pump unit and including actuators for controlling the dampers 21, 33, 35, 37 and 39, for controlling the engine 17 and compressor 5. The compressor 5 may be a multi-stage compressor with the number of stages on line being determined by the control circuitry 49 in accordance with the heating demand for most efficient operation.

In general, the control circuitry 49 should be programmed to operate the heat pump unit in the most efficient and economical manner. It does this in part by controlling the operation of the damper 21 depending on its humidity so as to maximise the available heat content of the airstream through the condensor 7 which is available for extraction. In general, the airstream through the damper 21 will be hotter than the airstream through the louvre 19 when the heat pump is running. The control circuit further coordinates the operation of the dampers 21 with that of the dampers 37 and 39 so as to ensure that air extracted from the glasshouse space is adequately replaced.

With respect to the evaporator section, the controller 49 compares the respective enthalpies of the air available from the dampers 33, 37 and 39 to determine whether it would be more economical to reheat the recirculated air from the damper 33 or heat a mixture of air from the dampers 37 and 39 and sets the position of the dampers accordingly. The enthalpy-based selection of the air ensures that the minimum heat necessary is expended heating the air through the condensor 9 at the desired outlet temperature. Alternatively the controller can select the air on the basis of dry bulb temperature.

If the damper 21 is fully closed, space air entering via the damper 37 can be recirculated by itself.

The control circuitry 49 may also be provided with a user interface 55 by means of which it may display relevant information to the user and/or provide facilities for manual start-up and override of the system.

It will be appreciated that instead of being defined by panels 11 carried by the frame-like chassis 3, the compartments 13 and 15 could be defined by ducting within the framework of a chassis.

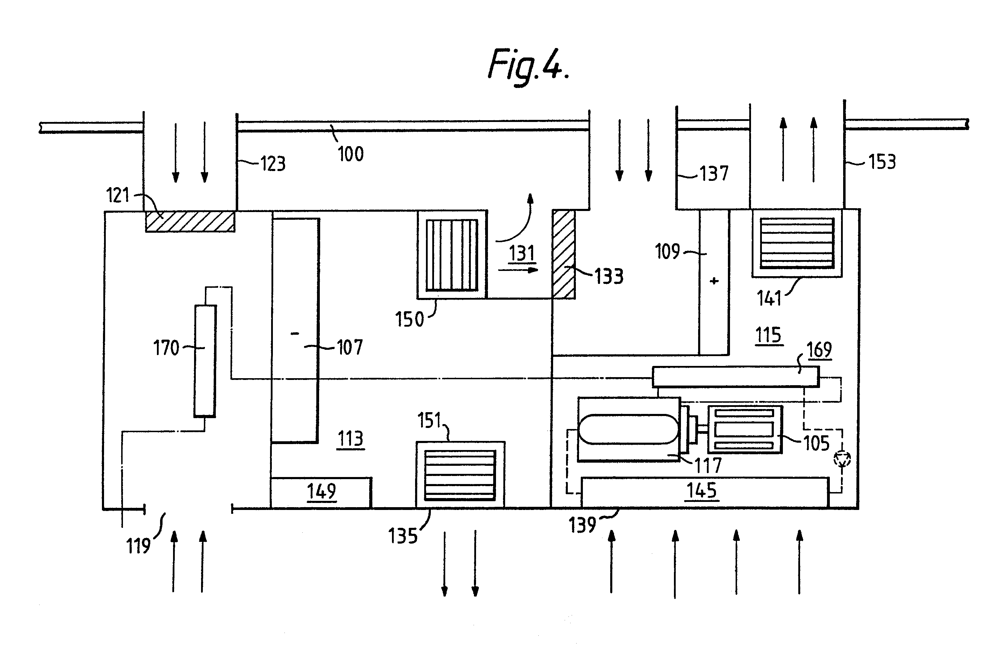

A second, and presently preferred, embodiment is shown in Figure 4 with the various components corresponding with those of the embodiment of Figure 1 being indicated with equivalent references with the addition of 100.

A first compartment 113 for a first part of the air flow through the apparatus is provided with an inlet 123 from a glasshouse 100 controlled by louvres 121 and an inlet 119 provided with fixed inlet louvres. Air is drawn through the compartment 113 by a blower 151 connected to outlet 131 to the outside and a blower 150 directing its flow into a space or chamber 131 for optional recirculation as will be described later. An evaporator 107 of the heat pump system is mounted in the compartment 113 downstream of the inlets and also downstream of the silencer 170 in the exhaust manifold from engine 117 mounted in the second compartment 115.

The second compartment 115 is provided with three inlets, a first inlet controlled by louvres 133 for air from chamber 131, a second inlet 137 for air from the glasshouse, and a third inlet 139 for fresh air from the outside. The condensor 109 is so mounted in the compartment 115 and this compartment is itself so sub-divided that air from the first and second inlets only can pass through the chamber 109 on the way to be mixed with fresh air from the third inlet 139 before being passed by blower 141 to outlet 153 returning the air to the glasshouse. The engine 117 for driving the compressor 105 has a coolant circuit including a radiator 145 and a jacket 169 about the engine exhaust heat exchanger. Adjustable louvres may be provided on one or other of the second and third inlets 137 and 145 respectively, for adjusting the balance of flow from these inlets but in many cases such will not be required, adequate control being obtained by use of the controlled louvres 121 and 133.

Temperature sensors, not shown, are provided for sensing the temperature of ambient air and the temperature of air in the compartment 113 downstream of the evaporator 107. When the temperature of ambient air is lower than that in the compartment 113, the louvres 133 are opened. Air leaving the blower 150 has a high velocity pattern and will be caused to blast across chamber 131 and increase the total flow of air through condensor 109 to change the balance of air flow into compartment 115 with there being a reduction in the relative amount of fresh air admitted through inlet 139. When the louvres 133 are closed, the air leaving the blower 150 is deflected in the chamber 131 to pass through atmosphere.

A scrubber, not shown, may be provided for cleaning the exhaust gases leaving the exhaust manifold, this being particularly advantageous when the engine is one burning a clean fuel such as gas rather than a dirty fuel such as diesel oil. The cleaned gases rich in carbon dioxide can then be fed into the air flow as and when required to raise the carbon dioxide content in the glasshouse to a desired level.

Generally the apparatus provides an extremely efficient means for heating a glasshouse with the heat added to the air leaving the heat pump apparatus to the glasshouse being as much as or more than twice the total energy content of the fuel. Additionally there is the minimum wastage of heat with heat being abstracted from the high enthalpy damp air which need to be removed to maintain humidity at an acceptable level. Additionally there is a minimum loss of air which is recirculated to a very large extent to maintain high carbon dioxide levels. When the ambient temperature is low further recirculation is possible of air from which excess moisture has been removed by cooling.

- 11 -

CLAIMS

1. A heat pump apparatus for heating air to be supplied to a closed environment, part of the heat to be supplied being extracted from damp air received from the environment, such apparatus having a refrigerator circuit comprising an evaporator (7) for extracting heat from part of the flow of air through the apparatus, a condensor (9) for rejecting heat to a second part of the flow of air through the apparatus and a refrigerant compressor (5); and a fossil-fueled engine (17) for driving the compressor (5) and so disposed in the air flow that the heat radiated from it heats the air flow, characterised in that the first part (13) of the air flow has separate fresh air and damp air inlets (19, 23); means (35) are provided for venting at least some of the first part of the air flow to atmosphere and, optionally (at 31) for venting some of the first part of the air flow through a first inlet (33) into the second part of the air flow; second and third inlets (45, 37) are provided to the second air flow for the inlet of fresh air and damp air thereto; and a radiator (45) for rejecting further heat from the engine is located in the second part of the air flow.

2. Apparatus according to claim 1 characterised in that the engine (17) is provided in the first part (13) of the air flow upstream of the evaporator (7).

3. Apparatus according to claim 2 characterised in that the condensor (9) and radiator (45) are both so located in the second part of the air flow as to be downstream of both the second and third inlets (39, 37).

4. Apparatus according to claim 1 characterised in that the engine (117) is provided in the second part (115) of the air flow.

5. Apparatus according to claim 4 characterised in that the radiator (145) is located immediately downstream of the second, fresh air, inlet (139) to the second part (115) of the air flow.

6. Apparatus according to claim 4 or 5 characterised in that the condensor (109) is mounted immediately downstream of the third, damp air, inlet (137) to the second part of the air flow.

7. Apparatus according to claim 4, 5 or 6, characterised in that the first inlet (133) to the second part of the air flow is upstream of the condensor (109).

8. Apparatus according to claim 4, 5, 6 or 7, characterised in that the first inlet to the second part of the air flow comprises controllable louvres (133) aligned to receive the discharge of air from a blower (150) abstracting air from the first part of the air flow, a chamber (131) communicating with atmosphere being provided between the blower and the louvres for permitting the discharge of air from the blower to atmosphere when the louvres are at least partly closed.

9. Apparatus according to claim 8 characterised in that the louvres are provided with control means to cause them to open when the temperature of the air in the first part of the air flow downstream of the evaporator is higher than that of ambient fresh air.

10. Apparatus according to any one of the preceding claims characterised in that the radiator (45) is in a

0105734

- 13 -

circuit containing coolant heated by the cooling system of
the engine.

11. Apparatus according to any one of the preceding
claims characterised in that the radiator (45) is heated by
coolant circulated in an exhaust gas heat exchanger (69) of
the engine.

12. Apparatus according to claim 11 when appendant to
claim 4, characterised in that the exhaust manifold is
provided with a silencer (170) located in the first part
(113) of the air flow upstream of the evaporator (107).

13. Apparatus according to any one of the preceding
claims, characterised in that a scrubber is provided for
cleaning the exhaust gases of the engine prior to directing
them into the air flow for increasing the carbon dioxide
content thereof.

14. Apparatus according to any one of the preceding
claims characterised in that it is in the form of a
self-contained unit comprising a chassis carrying the
various parts of the heat pump and having first and second
compartments (13, 15; 113, 115) defining the flow paths of
the first and second parts respectively of the air flow,
the unit being provided with respective apertures providing
the said inlets and outlets of the first and second parts
of the air flow.

*Fig.1.*

*Fig.2.*

01057734

*Fig.3.*

0105734

Fig.4.